# EUROPEAN PATENT APPLICATION

(11) **EP 1 857 251 A1**
(43) Date of publication of application: **21.11.2007**
(21) Application number: 06715411.2
(22) Date of filing: 08.03.2006
(51) Int. Cl.: B29C 45/16, B29C 45/14

(54) **PROCESS FOR PRODUCING HOUSING FOR ELECTRONIC EQUIPMENT**

(30) Priority: 10.03.2005 JP 2005066461
(71) Applicant: NISSHA PRINTING CO., LTD., Nakagyo-ku Kyoto-shi Kyoto 604-8551 (JP)
(72) Inventor: HAMAOKA, Koichi, Nakagyo-ku, Kyoto-shi, Kyoto, 6048551 (JP)
(74) Representative: HOFFMANN EITLE
(86) International application number: PCT/JP2006/304491
(87) International publication number: WO 2006/095781

(57) **Abstract**

A method of manufacturing a casing for an electronic apparatus, comprising the steps of with the use of injection molding die (1) having a combination of common mold (4) and exchangeable mold (2,3) so as to be able to form primary molding cavity (11) and secondary molding cavity (12), disposing in the primary molding cavity a transfer material having a decorative layer superimposed on a base sheet, and thereafter injecting a transparent resin that has a visible light transmittance of 80% or more defined in JIS-K7105 and pencil hardness of F or more defined in JIS-K5600-5-4 thereby obtain primary mold product (53) corresponding to a transparent window portion and simultaneously bonding the decorative layer of the transfer material; and subsequently injecting a resin that has a Izod impact strength 10 KJ/M² or more defined ASTM-D256 in the secondary molding cavity around the primary molding while holding the primary mold product disposed to thereby form secondary mold product (54) fixed to the primarymold product and simultaneously bonding the decorative layer of the transfer material; and detaching the transfer material from the primary mold product and secondary mold product.

## Description

### TECHNICAL FIELD

The present invention relates to a method of manufacturing a casing for an electronic apparatus, which makes it possible to easily obtain a casing for an electronic apparatus that is provided with a transparent window section and a main body portion, and used for a mobile telephone, a PDA or the like.

### BACKGROUND ART

Inmost of the existing casings for mobile telephones, the device used for displaying information implemented by a liquid crystal and an EL is provided with both a window member having high transparency, used for protecting the device, and a casing member having a high impact resistance, used for protecting the entire internal circuit. Moreover, the window member also needs to have a high scratch resistance to ensure good visibility for the information display device.

With respect to the material having both the transparency and the scratch resistance, PMMA (polymethyl methacrylate) is preferably selected. Since PMMA is inferior in the impact resistance when used as a simple substance, those materials formed by adding sulfurized rubber or the like thereto to improve the impact resistance are used in most cases; however, even this arrangement fails to provide an impact resistance that is sufficient for use in such a portion that is directly subj ected to an impact at the time of falling of the product or the like.

For this reason, conventionally, the window member and the casing member are separately molded by using different molding resins respectively, and these are then bonded to each other by using a double-sided tape to form an integral portion, or welded to each other into an integral portion, by using ultrasonic waves, lasers, or the like.

### DISCLOSURE OF THE INVENTION

### PROBLEMS TO BE SOLVED BY THE INVENTION

However, the above-mentioned method has a problem with the process for forming the two members into an integral portion.

Although the method using a double-sided tape has beenwidelyusedbecause it can reduce the costs to a comparatively low level, the fitting portion needs to have an area exceeding apredetermined area so as to ensure a sufficient bonding strength of the double-sided tape. Moreover, since three members in total, that is, the two members and the double-sided tape, are superposed on one another at this fitting portion, the resulting product has an increased thickness.

Further, the welding method causes an increase in the manufacturing cost, and also imposes limitation in selecting materials to be effectively used in the welding process.

Moreover, in any of these methods, in order to prevent the window member from coming off, the fitting portions of the two members are preferably designed such that the window member is fitted from the outside of the casing member. In case of reversely arranged, the fitting portions might come off inward when a pressure is applied to the window member from the outside, to cause the window member to fall inward of the casing member. In the above-mentioned arrangement, however, since the joined portion in the fitting portion is visible from the outside of the product through the transparent window member, any coating treatment is required. Since performing a decorating process on the surface of a three-dimensional article involves various difficulties, limitations are caused in designing the shape as a result.

The present invention has been made to solve the above-mentioned problems, and its object is to provide a method of manufacturing a casing for an electronic apparatus, by which a molded product with a transparent window section having a good scratch resistance and a strength retaining portion having a good impact resistance can be easily obtained.

### MEANS FOR SOLVING THE PROBLEMS

In order to achieve the above-mentioned obj ect, the following arrangement is provided according to the present invention. The first aspect of the present invention provides a method of manufacturing a casing for an electronic apparatus comprising:
with a transfer material in which a decorative layer is formed on a base sheet placed between a first exchangeable mold and a common mold for forming a primary molding cavity, clamping the molds to form the primary molding cavity;
by injecting a primary molding resin into the primary molding cavity, forming a primary molded product and bonding the decorative layer of the transfer material to the primary molded product;
opening the first exchangeable mold from the common mold to exchange for a second exchangeable mold for forming a secondary molding cavity with the common mold;
forming the secondary molding cavity by clamping the second exchangeable mold and the common mold so that the primary molded product is housed therein while being bonded to the transfer material;
by injecting a secondary molding resin into the secondary molding cavity, forming a secondary molded product anchored to the primary molded product and bonding the secondary molded product to the decorative layer of the transfer material; and
peeling the primarymoldedproduct and the secondary moldedproduct from the transfer material, thereby manufacturing the casing for an electronic apparatus on the surface of which the decorative layer of the transfer material is transferred, one of the primary molded product and the secondary molded product being formed as a transparent window section, the other being formed as a main body portion of the casing.

The second aspect of the present invention provides the method of manufacturing the casing for an electronic apparatus of the first aspect, wherein a transparent resin is injected as the primary molding resin to form the primary molded product, so that the casing for an electronic apparatus, which has the secondary molded product as the main body portion and has the primary molded product as the transparent window section, is manufactured.

The third aspect of the present invention provides the method of manufacturing the casing for an electronic apparatus of the first aspect, wherein a transparent resin is injected as the secondary molding resin to form the secondary molded product, so that the casing for an electronic apparatus, which has the primary molded product as the main body portion and has the secondary molded product as the transparent window section, is manufactured.

The fourth aspect of the present invention provides the method of manufacturing the casing for an electronic apparatus of the first and second aspects, wherein the primary molded product is formed by using, as the primary molding resin, a resin that has a visible light transmittance of 80 % or more defined in JIS-K7105 and a pencil hardness of F or more defined in JIS-K5600-5-4.

The fifth aspect of the present invention provides the method of manufacturing the casing for an electronic apparatus of the fourth aspect, wherein the primary molded product is formed by using, as the primary molding resin, a resin formed by adding rubber to a polymethyl methacrylate resin.

The sixth aspect of the present invention provides the method of manufacturing the casing for an electronic apparatus of the first and second aspects, wherein the secondary moldedproduct is formed by using, as the secondarymolding resin, a resin that has an Izod impact strength of 10 KJ/m² or more defined in ASTM-D256.

The seventh aspect of the present invention provides the method of manufacturing the casing for an electronic apparatus of the first aspect, wherein the secondary molding resin is a resin having a molding temperature higher than that of the primary molding resin, and the surface of the primary molded product is fused to make the primary molded product and the secondary molded product anchored to each other.

The eighth aspect of the present invention provides the method of manufacturing the casing for an electronic apparatus of the first and second aspects, wherein the decorative layer is provided with a transparent area having an area that can be placed and accommodated within the primary molding cavity and an opaque area arranged on the periphery of the transparent area, and the decorative layer is transferred in such a manner that the vicinity of an anchored portion between the primary molded product and the secondary molded product can be shielded.

The ninth aspect of the present invention provides the method of manufacturing the casing for an electronic apparatus of the eighth aspect, wherein the transparent area of the decorative layer is formed by an ink including a transparent resin, and the transparent area is bonded to the primary molded product in the injecting the primary molding resin.

### EFFECT OF THE INVENTION

In accordance with the first aspect of the present invention, the primary molding resin is injected with the transfer material placed in the primary molding cavity, and a secondary molding cavity is formed, with a primary molded product, which is made of the primary molding resin and bonded to the transfer material, left remaining therein; therefore, it becomes possible to prevent problems such as displacement of the primary molded product. Moreover, by injecting the secondary molding resin onto the periphery of the primary molded product, the primary molded product and the secondary molded product are firmly anchored to each other so that a molded product can be manufactured. Here, the primary molded product may be formed by using a transparent primary molding resin corresponding to the transparent window section. Moreover, the primary molded product may be formed by using a resin corresponding to the main body portion. In this case, the secondary molding resin is prepared by a transparent resin corresponding to the transparent window section. With this arrangement, it is possible to manufacture a casing for an electronic apparatus in which the transparent window section and the main body portion are firmly anchored to each other.

In accordance with the fourth aspect of the present invention, the transparent window section is formed by using, as the primary molding resin, a resin that has a visible light transmittance of 80 % or more defined in JIS-K7105 and a pencil hardness of F or more defined in JIS-K5600-5-4; thus, it is possible to manufacture the casing for an electronic apparatus that ensures the screen visibility and scratch resistance of the transparent window section. With respect to the specific primary molding resin having these properties, for example, a resin formed by adding rubber to a polymethyl methacrylate resin is desirably used.

In accordance with the sixth aspect of the present invention, the main body portion is formed by using, as the secondary molding resin, a resin that has an Izod impact strength of 10 KJ/m² or more defined in ASTM-D256; thus, it is possible to manufacture a casing for an electronic apparatus that ensures sufficient strength required for the main body portion.

In accordance with the seventh aspect of the present invention, by using a resin having a molding temperature higher than that of the primary molding resin; thus, the primary molded product and the secondary molded product are firmly anchored to each other.

In accordance with the eighth aspect of the present invention, the transparent area of the decorative layer is made smaller than the primary molding cavity, with an opaque area formed on the periphery of the transparent area; therefore, it is possible to shield the vicinity of the anchored portion between the primary molded product and the secondary molded product.

Since the transparent area is formed by an ink containing a transparent resin, it is possible to widen an area at which the primary molded product is bonded to the decorative layer, and consequently to allow the transfer material and the primary molded product to be made in tight-contact with each other when forming the secondarymoldedproduct; thus, it becomes possible to prevent displacement and coming off of the primary molded product.

### BRIEF DESCRIPTIONS OF THE DRAWINGS

These and other aspects and features of the present invention will become clear from the following description taken in conjunction with the preferred embodiments thereof with reference to the accompanying drawings.
Fig. 1 is apartial cross-sectional perspective view that shows one embodiment of a casing for an electronic apparatus obtained by a method of manufacturing a casing for an electronic apparatus in accordance with the present invention.
Fig. 2A is a diagram that shows one process according to an embodiment of the method of manufacturing a casing for an electronic apparatus of the present invention, and corresponds to a state in which a primary molding core mold and a cavity mold are closed.
Fig. 2B is a partially enlarged view of Fig. 2A.
Fig. 2C is a diagram that shows one process according to the embodiment of the method of manufacturing a casing for an electronic apparatus of thepresent invention, and corresponds to a state in which the primary molding core mold and the cavity mold are opened.
Fig. 3A is a diagram that shows one process according to the embodiment of the method of manufacturing a casing for an electronic apparatus of thepresent invention, and corresponds to a state in which a secondary molding core mold and a cavity mold are closed.
Fig. 3B is a diagram that shows one process according to the embodiment of the method of manufacturing a casing for an electronic apparatus of thepresent invention, and corresponds to a state in which a secondary molding resin is injected into the secondary molding cavity.
Fig. 4 is a diagram that shows one process according to another embodiment of the method of manufacturing a casing for an electronic apparatus of the present invention, and corresponds to a state in which a primary molding core mold and a cavity mold are closed.
Fig. 5 is a diagram that shows one process according to still another embodiment of the method of manufacturing a casing for an electronic apparatus of the present invention, and corresponds to a state in which a secondary molding core mold and a cavity mold are closed.
Fig. 6 is a cross-sectional view that shows one embodiment of a transfer material to be used in the method of manufacturing a casing for an electronic apparatus according to the present invention.

### BEST MODE FOR CARRYING OUT THE INVENTION

Before the description of the present invention proceeds, it is to be noted that like parts are designated by like reference numerals throughout the accompanying drawings. Referring to the attached drawings, a first embodiment of the present invention will be discussed in the following description.

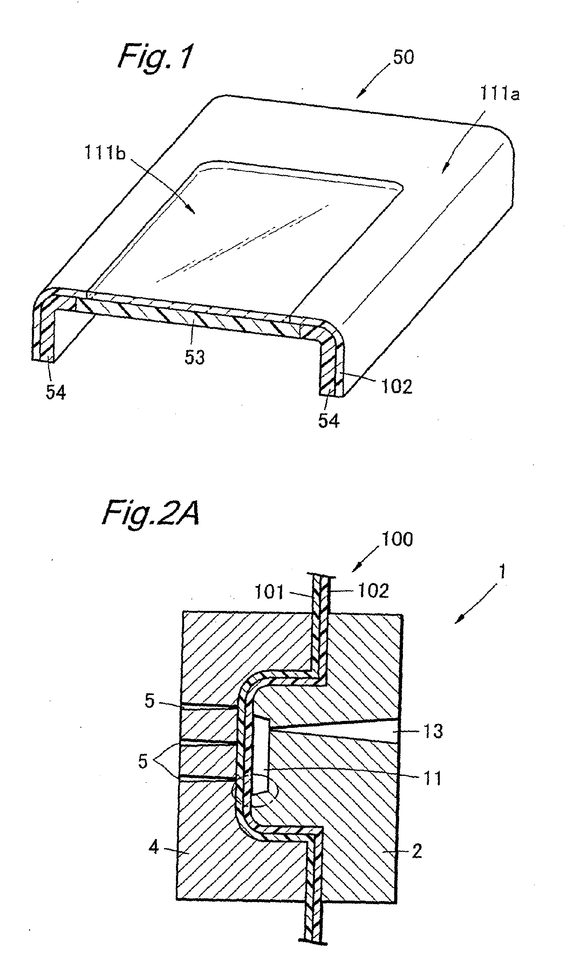

The method of manufacturing a casing for an electronic apparatus according to the present embodiment relates to a method of manufacturing a casing for an electronic apparatus, for example, as shown in Fig. 1. A casing 50 for an electronic apparatus is provided with a transparent window section 53 made of a transparent resin and a main body portion 54 forming the casing main body, and when forming the transparent window section 53, a picture pattern is transferred onto the surface by using a simultaneous molding and transferring method. The picture pattern has a transparent portion 111b arranged on the transparent window section 53 and an opaque portion 111a arranged on the main body portion 54 and a joined portion between the transparent window section 53 and the main body portion 54. In Fig. 1, the transparent portion 111b and the opaque portion 111a are respectively formed on the outside surface of the casing 50; however, for example, the picture pattern may be transferred onto the inside of the casing. Here, the picture pattern 51, which is transferred onto the casing by way of the transfer material, is preferably made such that the transparent portion 111a becomes smaller than the transparent window section 53, and that the border portion of the transparent window section 53 and the main body portion 54 is covered.

In the method of manufacturing a casing for an electronic apparatus in accordance with the present embodiment, a so-called two-color molding metal molding die unit 1, which is used for manufacturing a two-color molded product by using two kinds of molten molding resins that have different colors and material properties, and respectively form the transparent window section 53 and the main body portion 54, is used.

The two-color molding metal molding die unit 1 is capable of forming an injection molded product made from two different kinds of resins. More specifically, it is, for example, constituted by three kinds of core molds, that is, a primary molding core mold 2 as one example of a first exchangeable mold, a secondary molding core mold 3 as one example of a secondary exchangeable mold, and a cavity mold 4 as one example of a common mold.

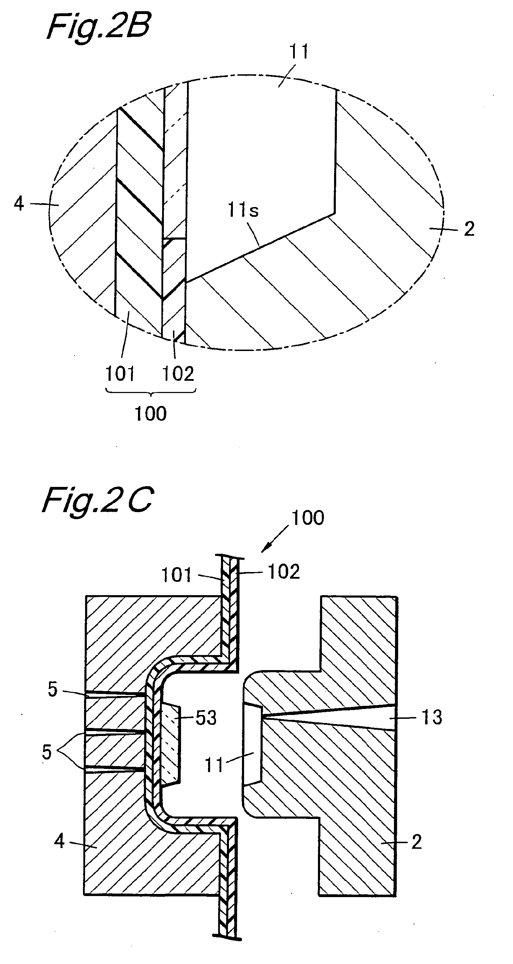

Referring to Figs. 2Aand 3A, the specific structures of the three core molds will be discussed in the following description. The core molds shown in this example have the following structures, respectively. In the primary molding core mold 2, a primary molding cavity 11 is formed, and a primary molding resin injection path 13 used for injecting a primary molding resin is formed in the primary molding cavity 11. In the present embodiment, a primary molded product corresponding to the transparent window section 53 of the casing is formed by the primary molding cavity 11.

In the secondary molding core mold 3, a secondary molding cavity 12 is formed, and a secondary molding resin injection path 14 used for injecting a secondary molding resin is formed in the secondary molding cavity 12. In the present embodiment, a secondary molded product corresponding to the main body portion 54 of the casing is formed by the secondary molding cavity 12. As will be described later, by injecting the secondary molding resin into the secondary molding cavity 12, the primary molded product corresponding to the transparent window section 54 and the secondary molded product formed by the secondary molding resin are anchored to each other so that the entire casing is molded.

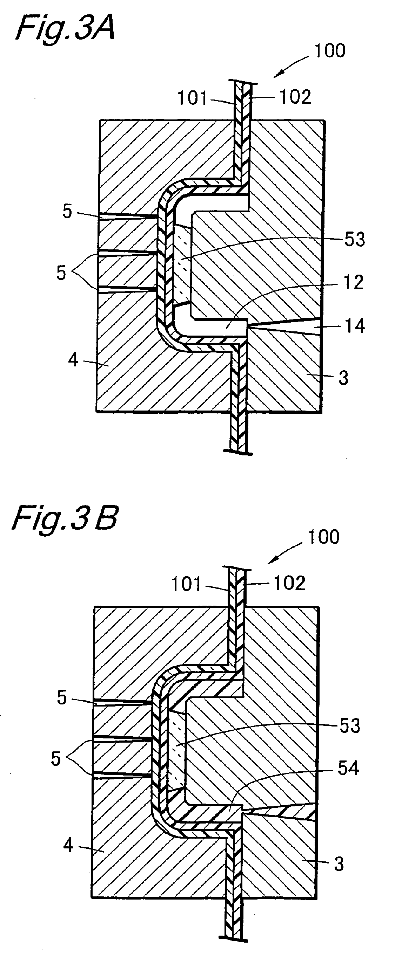

The cavity mold 4 is a mold in which a transfer material 100 having a film shape is placed when carrying out the simultaneous molding and transferring process. In Figs. 2A and 3A, since the transfer material 100 is placed in the cavity mold 4, no molding resin injection path used for discharging a molten resin is formed in the cavity mold 4; however, another structure having a molding resin injection path may be employed. The transfer material 100 is placed in the cavity mold 4 by a transfer material feeding device (not shown) and a transfer material winding device (not shown) that are installed in the injection molding machine for supplying the transfer material to the cavity mold 4.

The primary molding core mold 2 and the secondary molding core mold 3 are attached to a movable disc (not shown), such as a rotary disc capable of rotating and a slide disc capable of sliding, that is installed in the injection molding machine. The primary molding resin injection path 13 is connected to a primary molding resin injection nozzle of an injection unit, with the movable disc and the injection unit combined with each other at a position where a primary molding process is carried out. The secondary molding resin injection path 14 is connected to a secondary molding resin injection nozzle of the injection unit, with the movable disc and the injection unit combined with each other at a position where a secondary molding process is carried out.

The primary molding core mold 2 and the secondary molding core mold 3 may be attached to the slide disc. The rotary disc or the slide disc is secured to the tip of a shaft of a driving unit attached inside the injection unit of the injection molding machine. The driving unit drives the rotary disc to rotate or slide through the shaft. Moreover, the driving unit may drive the rotary disc or the slide disc forward and backward so as to allow the primary molding core mold 2 and the secondary molding core mold 3 to come close to or depart from each other with respect to the cavity mold 4.

The cavity mold 4 is attached to a fixed disc (not shown) of the injection molding machine. The fixed disc is secured to the tip of the shaft of the driving unit that is attached inside the driving unit. Here, the driving unit may drive the fixed disc forward and backward so as to allow the cavity mold to come close to or depart from the core mold. With respect to the cavity mold, a plurality of cavity molds may be placed in association with the primary molding core mold 2 and the secondary molding core mold 3, so as to simultaneously carry out the primary and secondary molding processes at different positions.

The injection unit may be either a lateral-type molding machine (in which a cavity mold and a core mold of metal molds are horizontally placed face to face and are closed in a horizontal direction) or a longitudinal-type molding machine (in which a cavity mold and a core mold of metal molds are vertically placed face to face and are closed in a vertical direction) . Moreover, the primary molding core mold 2 and the secondary molding core mold 3 may be aligned side by side vertically, or side by side laterally, or may be aligned face to face, with the injection path located in between.

In the injection unit, two cylinders used for discharging the two kinds of molding resins are installed, and nozzle holes through which the resins are injected to the molds are provided in each of the cylinders. The two cylinders may be placed on the same side with the metal mold sandwiched in between, or may be placed on different sides, depending on the structure of the mold. Moreover, these may be placed in any direction depending on the position of the molding resin injection path formed in the metal mold. Here, with respect to the cylinder used for discharging the two kinds of molding resins, a structure in which two molding resin injection nozzles are branched from one cylinder may be used.

The transfer material feeding device and the transfer material winding device are used for continuously supplying an elongated transfer material 10 to the cavity mold 4. The transfer material feeding device is constituted by the transfer material 100 wound into a roll shape, a supporting rod that supports this onto a fixed disc, a nip roller used for feeding the transfer material 100, a sensor used for an appropriate positioning process with respect to the cavity. The transfer material winding device is constituted by the transfer material 100 fed from the transfer material feeding device and wound into a roll shape, a supporting rod used for supporting this onto the fixed disc, etc.

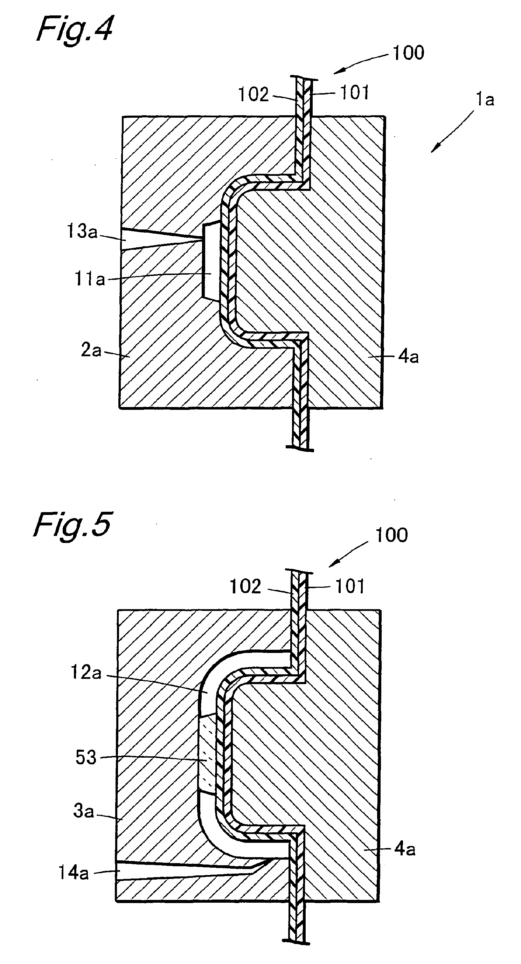

Additionally, core molds 2a and 3a and a cavity mold 4a having other structures as shown in Figs. 4 and 5 may be used. In the metal molding dies of this example, the transfer material 100 is placed on the inside face of the casing.

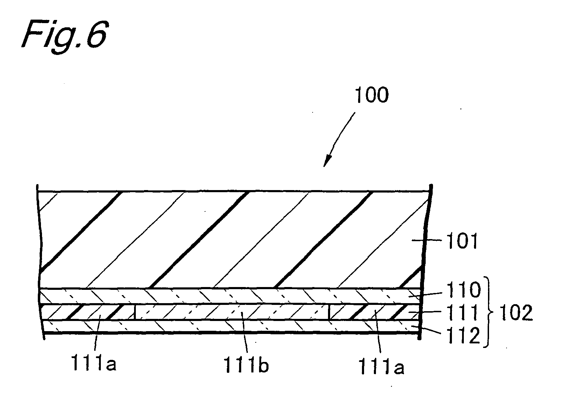

As shown in Fig. 6, the transfer sheet 100 has a structure in which a decorative layer 102 is formed on a base sheet 101.

With respect to the transfer material 100, for example, a structure in which a decorative layer 102 formed by laminating a peeling layer 110, a pattern layer 111, a bonding layer 112 and the like on the base sheet 101 may be used (see Fig. 6).

With respect to the material for the base sheet 101, those materials that are normally used for the base sheet 101 of the transfer material 100 may be used, for example, resin sheets made of materials such as a polypropylene-based resin, a polyethylene-based resin, a polyamide-based resin, a polyester-based resin, an acrylic resin and a polyvinyl chloride-based resin, metal foils such as aluminum foil and copper foil, cellulose-based sheets such as glassine paper, coated paper and cellophane, or a composite material of any of these sheets. Moreover, in the case where the surface of the base sheet 101 has fine irregularities, those fine irregularities are transferred onto the decorative layer 102 so that surface states such as a delustered state and a hairline state can be provided.

In the case where the decorative layer 102 is good in peeling from the base sheet 101, the decorative layer 102 may be directly formed on the base sheet 101. In order to improve the peeling property of the decorative layer 102 from the base sheet 101, prior to the formation of the decorative layer 102, a mold-releasing layer (not shown) may be formed on the entire surface of the base sheet 101.

The peeling layer 110 is formed on the entire surface of the base sheet 101 (or a mold-releasing layer). The peeling layer 110 is a layer which, upon peeling the base sheet 101 off after the transferring process simultaneously carried out with the molding process, is separated from the base sheet 101 or the mold-releasing layer to form the outermost face of the transferred article. With respect to the material for the peeling layer 110, in addition to an acrylic resin, a polyester-based resin, a polyvinyl chloride-based resin, a cellulose-based resin, a rubber-based resin, a polyurethane-based resin, a polyvinyl acetate-based resin and the like, a copolymer such as a vinyl chloride-vinyl acetate copolymer-based resin and an ethylene-vinyl acetate copolymer-based resin may be used. Moreover, with respect to the peeling layer 110, a photo-curable resin such as an ultraviolet-curable resin, a radiation-curable resin such as an electron radiation-curable resin, and a thermosetting resin may be used, whereby the scratch resistance of the transparent window section 53 can be further improved. With respect to the peeling layer 110, either a colored layer or an uncolored layer may be used. With respect to the forming method of the peeling layer 110, a coating method such as a gravure coating method, a roll coating method and a comma coating method, and a printing method such as a gravure printing method and a screen printing method, may be used.

Normally, the pattern layer 111 is formed on the peeling layer 110 as a printed layer. With respect to the material for the printed layer, a colorant ink in which a resin such as a polyvinyl-based resin, a polyamide-based resin, a polyester-based resin, an acrylic resin, a polyurethane-based resin, a polyvinyl acetal-based resin, a polyester-urethane-based resin, a cellulose ester-based resin and an alkyd resin is used as a binder, and a pigment or dye of an appropriate color is added thereto as a colorant, is preferably used. With respect to the formation method of the printed layer, a normal printingmethod such as a gravure printing method, a screen printing method and an offset printing method can be employed. In particular, when conducting a multi-color printing and a gradation printing, the offset printing method and the gravure printing method are appropriately used. In the case of mono-color printing, a coating method such as a gravure coating method, a roll coating method and a comma coating method can also be used. In the present invention, with respect to the pattern to be formed on the pattern layer 111, a transparent area 111b to be transferred onto the transparent window section 53 and an opaque area 111a to be transferred onto the main body portion 54 are used. With respect to the border portion between the transparent window section 53 and the main body portion 54, in order to prevent a positional offset due to a positioning error between the shape of the molded product and the pattern layer 111, the opaque area 111a is preferably formed as an area comparatively wider than the transparent window section 53 so as to cover the border portion.

The transparent area 111b, which is formed as a light-transmitting layer, is preferably formed by using an ink containing a transparent resin. More specifically, an ink made of only a transparent resin, an ink made of a dye and a resin binder, or an ink made of a colorant pigment or a fluorescent pigment having such a small particle size that does not cause a serious adverse effect on visibility and of a transparent resin binder, may be used.

The opaque area 111a, which is formed as a printed layer that shields light, is preferably formed by using an ink made of an opaque material having a shielding property such as carbon black and titanium oxide, and of a resin binder.

Moreover, the opaque area 111a of the pattern layer 111 may be made of a metal thin-film layer or a combined layer of a printed layer and a metal thin-film layer. The metal thin-film layer, which is used as the pattern layer 111 for providing metal luster, is formed by a method such as a vacuum vapor-deposition method, a sputtering method, an ion-plating method and a metal plating method. According to a desired metal luster color, metal such as aluminum, nickel, gold, platinum, chromium, iron, copper, tin, indium, silver, titanium, lead and zinc, and alloys or compounds of these, may be used. Moreover, in forming the metal thin-film layer, an anchor layer may be formed so as to improve the adhesion between the metal thin-film layer and another decorative layer 102. With respect to the material for the anchor layer, resins such as a two-part curable urethane resin, a thermosetting urethane resin, a melamine-based resin, a cellulose ester-based resin, a chlorine-containing rubber-based resin, a chlorine-containing vinyl-based resin, an acrylic resin, an epoxy-based resin and a vinyl-based copolymer resin, maybe used. With respect to the formingmethod of the anchor layer, a coating method such as a gravure coating method, a roll coating method and a comma coating method, and a printing method such as a gravure printing method and a screen printing method, may be used.

The bonding layer 112, which is used for bonding the above-mentioned respective layers onto the surface of the article to be transferred, is formedon the entire surface thereof. With respect to the bonding layer 112, a heat-sensitive or pressure-sensitive resin suitable for the resinmaterial forming the article to be transferred is appropriately used. With respect to the forming method of the bonding layer 112, a coating method such as a gravure coating method, a roll coating method and a comma coating method, and a printing method such as a gravure printing method and a screen printing method, may be used.

It should be noted that the structure of the decorative layer 102 is not limited to the above-mentioned aspect, and may have, for example, a structure in which, in the case of using a material that is good in adhesion to the article to be transferred as the material for the pattern layer 111, the bonding layer 112 is omitted.

In the following description, there will be discussed processes of the method of manufacturing a casing in accordance with the present embodiment by using metal molds having a structure shown in Figs. 2A and 3A.

First, a transfer material 100 is placed in a primary molding cavity 11. More specifically, the transfer material 100 is fed to the gap between the core mold 2 and the cavity mold 4 forming the primary molding cavity 11. At this time, sheets of the transfer material 100 may be fed sheet by sheet, or necessary portions of the transfer material 100 having an elongated shape may be intermittently fed frame by frame. In the case where the elongated transfer material 100 is used, a feeding device having a positioning mechanism is used so that registers of the pattern layer 111 of the transfer material 100 and the molding metal mold are brought appropriately coincident with each other.

Here, when intermittently feeding the transfer material 100, after detecting the position of the transfer material 100 by a sensor (not shown), the transfer material 100 is fixed by the core mold and the cavity mold, whereby the transfer material 100 can be always fixed at the same position, making it possible to prevent a misregistration of the pattern layer 111.

Moreover, after the transfer material 100 has been positioned, if necessary, the transfer material 100 is made in tight-contact with the respective cavity faces of the cavity mold 4. In order to make the transfer material 100 in tight-contact with the cavity faces, a film clamp (not shown) may be used. Here, another structure may be used in which a suction hole 5 is formed in the cavity mold so as to suck the transfer material 100. Moreover, still another structure may be used in which, in order to make the transfer material 100 in tight-contact with the cavity faces, the transfer material 100 is heated to soften. With respect to the heater to be used at this time, for example, an electric heater (not shown) capable of heating to a temperature in a range of 80 to 260°C may be used.

Next, the cavity mold 4 and the primary molding core mold 2 are clamped, and a primary molding cavity 11 is formed. Thereafter, a molten transparent primary molding resin is injected from a gate formed in the primary molding core mold 2 so that the primary molding cavity 11 is filled with the resin; thus, a primary molded product corresponding to the transparent window section 53 is formed, with the transfer material 100 simultaneously bonded to the surface thereof. At this time, the decorative layer 102 of the transfer material 100 is bonded to the primary molded product at a portion in which the decorative layer 102 of the transfer material 100 and the transparent resin are made in contact with each other.

With respect to the transparent primary molding resin, those resins having a visible light transmittance of 80 % or more defined in JIS-K7105 (1981) and a pencil hardness of F or more defined in JIS-K5600-5-4 (1999) are preferably used. Here, JIS-K5600-5-4 corresponds to a test relating to the scratch hardness of a coating film; however, the same test method may be carried out on a test piece prepared as a plate of the primary molding resin to check the presence or absence of press scratches with eyes.

In the present invention, it is to ensure the screen visibility of the transparent window section 53 that those resins having a visible light transmittance of 80 % or more defined in JIS-K7105 are used. When the visible light transmittance is less than 80 %, the display in the transparent window section 53 becomes dim, resulting in a difficulty in viewing the display screen formed on the lower side of the transparent window section 53. Moreover, in the present invention, it is to prevent scratches from occurring in the transparent window section 53 that those resins having a pencil hardness of F or more defined in JIS-K5600-5-4 are used. With respect to the transparent resins having such properties, for example, a polymethyl methacrylate (PMMA) resin or a resin formed by adding a rubber component into a PMMA resin may be used. The amount of addition is preferably set in a range from 10 to 50 % by weight of a rubber material such as sulfurized rubber, with respect to the PMMA resin.

After a primary molded product has been cooled and solidified, the cavity mold 4 and the core mold 2 are opened (see Fig. 2C). Since the primary molded product is bonded to the transfer film, it remains in the cavity mold 4. In order to prevent the primary molded product of the transparent window section 53 from separating from the cavity mold 4 when opening the molds, as shown in Fig. 2B, the primary molding cavity 11 is preferably formed into a so-called undercut shape in which the bottom face is wider than the opening section, with side walls 11s from the opening section to the bottom face inclined. This shape is effective because the transparent window section 53 is caught by the cavity side wall of the cavity mold (or the core mold) and made to be hardly drawn out; thus, the transparent window section 53 is easily separated from the core mold (or the cavity mold), and is also hardly separated from the cavity mold (or the core mold).

The secondary molding core mold 3 is shifted to such a position that faces the cavity mold 4 in which the transfer material 100 and the primary molded product are kept in tight-contact with each other. More specifically, by using the driving unit and the shaft of the injection unit, the rotary disc serving as a movable disc for the core mold may be rotated or the slide disc may be slid.

After the secondary molding core mold 3 and the cavity mold 4 have been shifted to the opposing position, the two molds are clamped, with the transfer material placed in the cavity mold 4 (see Fig. 3A), so that a secondary molding cavity 12 is formed. At this time, the primary molded product is inserted and housed in the secondary molding cavity 12, so that it functions as one of the members defining the secondary molding cavity 12. Consequently, since the secondary molding cavity 12 is formed with the primary molded product corresponding to the transparent window section 53 left therein, the secondary molding resin used for forming the main body portion 54 is injected onto the periphery of the primary molded body.

With respect to the secondary molding resin, one of those resins having an Izod impact strength of 10 KJ/m² or more defined in ASTM-D256 is preferably used. The injection process of the secondary molding resin is carried out by discharging the molding resin to a secondary molding resin injection path 14 through a secondary molding resin injection nozzle, by using the injection mechanism of the injection unit (see Fig. 3B). Here, by the discharge of the secondary molding resin, the peripheral portion of the primary molded product is filled with the secondary molding resin, so that the primary molded product and the secondary molding resin are anchored to each other to form an integral portion. Moreover, the decorative layer 102 of the transfer material 100 is bonded to the surface of the secondary molding resin, whereby a molded product on the surface of which the decorative layer 102 is laminated is obtained.

With respect to the secondary molding resin, a resin having an Izod impact strength of 10 KJ/m² or more defined in ASTM-D256 is preferably used. In the present invention, it is to ensure a sufficient strength required as the main body portion 54 that the resin having an Izod impact strength of 10 KJ/m² or more defined in ASTM-D256 is used. In the case where the Izod impact strength is less than 10 KJ/m², a problem arises that the resulting product fails to withstand an impact or the like caused by falling. With respect to the resin that satisfies these properties, for example, a resin such as a PC resin, an ABS resin and a mixed resin of these is preferably used.

Next, the core mold 3 and the cavitymold 4 are opened, and a molded product into which the primary molded product and the secondary molded product are integrated, with the transfer material 100 bonded to the surface thereof, is taken out. Simultaneously with or after taking the molded product out of the metal mold, the base sheet 101 is separated therefrom.

In this manner, while molding the transparent window section 53, by using the transfer material 100 and the simultaneous molding and transferring method, there can be obtained a casing 10 for an electronic apparatus, which has an opaque pattern transferred on a connecting portion between the primary molded product forming the transparent window section 53 and the secondary molded product forming the main body portion 54.

Moreover, in the present invention, the order of the molding processes of the two kinds of resins may be reversed. However, it is preferable to select a resin having a highermolding temperature as the resin to be molded later, because, when the secondary molding resin is injected onto the periphery of the primarymoldedproduct, the surface of the primary molded product is partially fused and melt-bonded to the secondary molding resin; thus, the adhesion of the two members are further strengthened. Normally, the PC resin or the mixed resin of the PC resin and the ABS resin has a higher molding temperature in comparison with the molding temperature of the PMMA resin; therefore, in the present embodiment, the transparent window section 53 made from a PMMA resin or the like is molded as a primary molded product, and the main body portion 54 made from a PC resin, or a mixed resin of a PC resin and an ABS resin or the like is then molded as a secondary molded product.

### (EXAMPLES)

A biaxial oriented polyethylene terephthalate film having a thickness of 38 µm was used as a base sheet, onto which an ink made of a mixture of an ultraviolet curable acrylic polyol, isocyanate and azo polymerization initiator was applied with a thickness of 5 µm as the peeling layer by using a gravure coating method, onto which an ink formed by dispersing a pigment in an acrylic resin was partially applied to form four layers with respective thicknesses in a range from 0 . 8 to 1. 5 µm as the pattern layer by using a gravure printing method, and onto which a vinyl chloride-vinyl acetate copolymer-based resin was further applied with a thickness of 2 µm as the bonding layer by using a gravure coating method; thus, a transfermaterial was obtained.

The transfer material thus obtained was loaded in a transfer material feeding device placed in a two-color molding apparatus, and the primary molding core mold and the cavity mold were clamped to form a primary molding cavity. Next, a PMMA resin was inj ection-molded in the primary molding cavity to form a primary molded body corresponding to the transparent window section.

Moreover, by changing the core mold to the secondary molding core mold, the secondary molding cavitywas formed. When the primary molding core mold and the cavity mold were opened, the primary molded product was bonded to the transfer material, and it became free from displacement and coming off. A mixed resin of a PC resin and an ABS resin was injection-molded in the secondary molding cavity, thereby forming a secondary molded product corresponding to the main body portion.

The molded product thus obtained was taken out of the metal mold, and the base sheet of the transfer material was separated, so that a casing for a mobile telephone was formed. The mobile telephone casing had a picture pattern transferred onto the main body portion thereof, with the transparent window section firmly anchored onto the main body portion. Moreover, the border portion between the main body portion and the transparent window section was coated with the picture pattern, and was not visually recognized from the outside.

The mobile telephone casing obtained in this manner was provided with a transparent window section having a good scratch resistance and a main body portion having a good impact resistance.

The present invention is not limited to the above-mentioned embodiments, and may be implemented in various other modes. For example, the secondary molding cavity may belong to either one of the cavitymold 4 and the secondarymolding core mold 3, or may belong to both of these. Moreover, with respect to the primary molding process and the secondary molding process, molding resin injection paths may be formed in different core molds. For example, the primary molding resin injection path 13, which feeds the primary molding resin to the primary molding cavity 11, may be formed in the cavity mold 4, while the secondary molding resin injection path 14, which feeds the secondary molding resin, may be formed in the secondary molding core mold 3. With this arrangement, the primary resin molded product corresponding to the transparent window section 53 is easily brought into an adhered state to the cavity mold 4 by the primary molding resin injection path 13. In other words, when opening the primary molding core mold 2 and the cavity mold 4 to make a change to the secondary molding core mold 3, it is possible to prevent the primary resin molded body from coming off.

By appropriately combining any of the above-described various embodiments, the respective effects produced therefrom can be obtained.

### INDUSTRIAL APPLICABILITY

The present invention is preferably applied to the method of manufacturing a casing for an electronic apparatus, which has a transparent window section firmly anchored onto the main body portion thereof, and has a high industrial applicability as a method of manufacturing such a casing for an electronic apparatus such as a mobile telephone and a PDA.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A method of manufacturing a casing for an electronic apparatus comprising:
with a transfer material (100) in which a decorative layer (102) is formed on a base sheet (101) placed between a first exchangeable mold (2) and a common mold (4) for forming a primary molding cavity (11), clamping the molds to form the primary molding cavity (11);
by injecting a primary molding resin into the primary molding cavity (11), forming a primary molded product (53) and bonding the decorative layer (102) of the transfer material to the primary molded product (53);
opening the first exchangeable mold (2) from the common mold to exchange for a second exchangeable mold (3) for forming a secondary molding cavity (12) with the common mold;
forming the secondary molding cavity (12) by clamping the second exchangeable mold (3) and the common mold (4) so that the primary molded product (53) is housed therein while being bonded to the transfer material (100);
by injecting a secondary molding resin into the secondary molding cavity (12), forming a secondarymoldedproduct (54) anchored to the primary molded product (53) and bonding the secondary molded product (54) to the decorative layer (102) of the transfer material; and
peeling the primary molded product (53) and the secondary molded product (54) from the transfer material (100), thereby manufacturing the casing for an electronic apparatus on the surface of which the decorative layer (102) of the transfer material is transferred, one of the primary molded product (53) and the secondary molded product (54) being formed as a transparent window section, the other being formed as a main body portion of the casing.

2. The method of manufacturing the casing for an electronic apparatus, according to claim 1, wherein a transparent resin is injected as the primary molding resin to form the primary molded product (53), so that the casing for an electronic apparatus, which has the secondary molded product (54) as the main body portion and has the primary molded product (53) as the transparent window section, is manufactured.

3. The method of manufacturing the casing for an electronic apparatus, according to claim 1, wherein a transparent resin is injected as the secondary molding resin to form the secondary molded product (54), so that the casing for an electronic apparatus, which has the primary molded product (53) as the main body portion and has the secondary molded product (54) as the transparent window section, is manufactured.

4. The method of manufacturing the casing for an electronic apparatus, according to claim 1 or 2, wherein the primary molded product is formed by using, as the primary molding resin, a resin that has a visible light transmittance of 80 % or more defined in JIS-K7105 and a pencil hardness of F or more defined in JIS-K5600-5-4.

5. The method of manufacturing the casing for an electronic apparatus, according to claim 4, wherein the primary molded product is formed by using, as the primary molding resin, a resin formed by adding rubber to a polymethyl methacrylate resin.

6. The method of manufacturing the casing for an electronic apparatus, according to claim 1 or 2, wherein the secondary molded product is formed by using, as the secondary molding resin, a resin that has an Izod impact strength of 10 KJ/m² or more defined in ASTM-D256.

7. The method of manufacturing the casing for an electronic apparatus, according to claim 1, wherein the secondary molding resin is a resin having a molding temperature higher than that of the primary molding resin, and the surface of the primarymoldedproduct is fused to make the primarymoldedproduct and the secondary molded product anchored to each other.

8. The method of manufacturing the casing for an electronic apparatus, according to claim 1 or 2, wherein the decorative layer (102) is provided with a transparent area (111b) having an area that can be placed and accommodated within the primary molding cavity (11) and an opaque area (111a) arranged on the periphery of the transparent area, and the decorative layer is transferred in such a manner that the vicinity of an anchored portion between the primary molded product and the secondary molded product can be shielded.

9. The method of manufacturing the casing for an electronic apparatus, according to claim 8, wherein the transparent area (111b) of the decorative layer is formed by an ink including a transparent resin, and the transparent area (111b) is bonded to the primary molded product in the injecting the primary molding resin.
